(19) **Europäisches Patentamt European Patent Office Office européen des brevets**

(11) **EP 3 907 683 B1**

(12) **EUROPEAN PATENT SPECIFICATION**

(45) Date of publication and mention of the grant of the patent:
**03.01.2024 Bulletin 2024/01**

(21) Application number: **21729198.8**

(22) Date of filing: **24.02.2021**

(51) International Patent Classification (IPC):
**G06F 21/44** *(2013.01)* **G06F 21/33** *(2013.01)*
**H04L 9/40** *(2022.01)* **G06Q 20/38** *(2012.01)*
**G06Q 20/40** *(2012.01)*

(52) Cooperative Patent Classification (CPC):
**G06Q 20/405; G06F 21/335; G06F 21/40; G06F 21/44; G06Q 20/38; G06Q 20/3827; G06Q 20/3829; G06Q 20/385; G06Q 20/40; H04L 63/0807; H04L 63/0838; H04L 63/0846; H04L 63/104**

(86) International application number:
**PCT/KR2021/002336**

(87) International publication number:
**WO 2021/172877 (02.09.2021 Gazette 2021/35)**

(54) **METHOD AND PROGRAM FOR AUTHENTICATION BETWEEN APPARATUSES BASED ON VIRTUAL AUTHENTICATION CODE**

VERFAHREN UND PROGRAMM ZUR AUTHENTIFIZIERUNG ZWISCHEN GERÄTEN BASIEREND AUF EINEM VIRTUELLEN AUTHENTIFIZIERUNGSCODE

PROCÉDÉ ET PROGRAMME D'AUTHENTIFICATION ENTRE APPAREILS SUR LA BASE D'UN CODE D'AUTHENTIFICATION VIRTUEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2020 KR 20200022023**

(43) Date of publication of application:
**10.11.2021 Bulletin 2021/45**

(73) Proprietor: **SSenStone Inc.**
**Seoul 04213 (KR)**

(72) Inventors:
• **YOO,Chang Hun**
**Dongjak-gu, Seoul 07050 (KR)**
• **KIM, Min Gyu**
**Yongin-si, Gyeonggi-do 16856 (KR)**
• **WYLD, Andrew**
**Mapo-gu, Seoul 04213 (KR)**
• **JEONG, Seung Seob**
**Mapo-gu, Seoul 04213 (KR)**

(74) Representative: **dompatent von Kreisler Selting Werner - Partnerschaft von Patent- und Rechtsanwälten mbB Deichmannhaus am Dom Bahnhofsvorplatz 1 50667 Köln (DE)**

(56) References cited:
GB-A- 2 489 563    JP-A- 2019 185 789
KR-A- 20140 127 987    KR-A- 20190 016 884
KR-A- 20190 063 537    KR-B1- 101 800 737
US-A1- 2019 312 733    US-A1- 2020 051 075

**Description**

[Technical Field]

The present invention relates to a device-to-device authentication method and program based on a virtual authentication code.

[Background Art]

Code type data is used in many areas. In addition to a card number and an account number used at the time of payment, an IPIN number, a social security number number, and the like for user identification are code type data.

Such code data is frequently leaked in use. The card number is actually written on the card surface as it is, so it is visually exposed to others. Also, when making payments using magnetics, the card number is transmitted to the POS device as it is.

There have been many attempts to use virtual codes to prevent real codes from being leaked as they are, but data for identifying users was required to search for real codes corresponding to virtual codes. For example, in case of OTP (One Time Password), the code is generated while changing every time, but a login procedure is required to determine the algorithm assigned to the user. This is difficult to apply to various areas.

Therefore, there is a need for an invention capable of authenticating a user or device based on a virtual authentication code that changes in real time, without providing identification information of the user or device such as a real card number or social security number.

Recently, many websites, platforms, etc. use the OAuth authentication scheme in which, even if users do not register user information in the website, access authority over user information registered in other websites is given. In case of the OAuth authentication method, a client server must obtain an access token in advance in order to be granted access authority over the user information of the platform.

In this case, the access token is only valid for a specific application in the platform or specific information on the website. For example, even if a specific client server obtains an access token for a Google Calendar for a specific member, access to other applications such as Google Driver or Google Spreadsheet is not allowed. Eventually, the client server should obtain access tokens for other applications for the specific member, and therefore should access an authentication server. If this situation is repeated, the user should access the authentication server each time to receive an access token, that is, access authority over each server device. This not only takes unnecessary time, but repetitive authentication procedures are accumulated, resulting in inferior efficiency.

D1 (GB2489563A) provides a method for long term delegation of cloud/server data/resource access authorisation to applications by establishing token request rights. Once trust is established in a service by an identity provider, the service may request tokens authorizing it to act on behalf of a user or users.

D2 (US2020051075A1) provides system, method and program for providing financial transaction by virtual code, virtual code generator and virtual code verification device.

[Disclosure]

[Technical Problem]

In order to solve the above-described problems, the present invention provides a server-to-server authentication device and method based on a virtual authentication code.

However, problems to be solved by the present invention are not limited to the above-described problems, and other problems that are not mentioned will be clearly understood by those skilled in the art from the following description.

[Technical Solution]

The present invention is defined by the appended independent claims. Dependent claims constitute embodiments of the invention.

[Advantageous Effects]

According to the present invention, authority authentication for a plurality of service devices is possible with only one authentication of the client device in the verification device. Through this, it is possible to save time and cost required for the client device to perform the authentication process after accessing the verification device for authorization authentication to each service device.

In addition, by generating a virtual code including role information for a plurality of service devices related to the client device, it is possible to prevent information on at least one service device for which the access authority over the client device is approved from being leaked.

In addition, according to the present invention, an algorithm for generating a virtual authentication code and searching for a role information storage space needs to be added, so that the existing process can be maintained. Through this, it is possible to minimize a part that needs to be changed in the existing process in order to increase security, and the user does not have to perform a separate step for improving security.

Effects of the present invention are not limited to the above-described effects, and other effects not mentioned will be clearly understood by those skilled in the art from the following description.

[Description of Drawings]

FIG. 1 is a flow diagram schematically illustrating a server-to-server authentication method based on a virtual authentication code according to an embodiment of the present invention.

FIG. 2 is a schematic configuration diagram of a client device according to an embodiment of the present invention.

FIG. 3 is a flow diagram schematically illustrating a method of requesting authority approval for a first device based on a first code of a client device according to an embodiment of the present invention.

FIG. 4 is a schematic configuration diagram of a first code of a client device according to an embodiment of the present invention.

FIG. 5 is a schematic configuration diagram of a verification device according to an embodiment of the present invention.

FIG. 6 is a flow diagram schematically illustrating a method of generating a second code by verifying a client device based on a first code according to an embodiment of the present invention.

FIG. 7 is an exemplary diagram of a storage location search algorithm for searching for a storage location of authentication information on a client device through a rolling movement of a k-gon according to an embodiment of the present invention.

FIG. 8 is a schematic configuration diagram of a second code generated by a verification device according to an embodiment of the present invention.

FIG. 9 is a schematic configuration diagram of a service device according to an embodiment of the present invention.

FIG. 10 is a flow diagram schematically showing a method of generating a third code, which is a virtual authentication code, based on a first code and a second code by a first device according to an embodiment of the present invention.

FIG. 11 is a schematic configuration diagram of a third code according to an embodiment of the present invention.

FIG. 12 is an exemplary diagram schematically illustrating a server-to-server authentication method based on a third code according to an embodiment of the present invention.

FIG. 13 is a flow diagram schematically illustrating a server-to-server authentication method based on a third code according to an embodiment of the present invention.

FIG. 14 is a flow diagram schematically illustrating a method of approving authority over a client device based on a third code according to an embodiment of the present invention.

FIG. 15 is a flow diagram schematically illustrating a method of approving authority over a client device based on a third code according to an embodiment of the present invention.

FIG. 16 is a flow diagram schematically illustrating a generation of a new third code based on verification and authority approval information of a client device by a second device of the present invention.

[Mode for Disclosure]

The advantages and features of the present invention and the manner of achieving them will become apparent through embodiments described below with reference to the accompanying drawings. The present invention may be, however, embodied in many different forms and should not be construed as being limited to the embodiments set forth herein. Rather, these embodiments are provided so that the present invention will be thorough and complete and will fully convey the scope of the present invention to those skilled in the art. The present invention is only defined by the scope of the appended claims.

Terms used herein are merely to describe embodiments and are not intended to limit the present invention. In this disclosure, singular expressions include plural expressions unless the context clearly dictates otherwise. The terms such as "comprise" and/or "comprising" used herein do not exclude the presence or addition of one or more elements other than a mentioned element. The term "and/or" includes any combination or any of a plurality of mentioned elements. Expressions including ordinal numbers such as "first" and "second" indicate various elements, but the above expressions do not limit the elements. These elements are used merely for the purpose to distinguish one element from the others. Thus, within the subject matter the present invention, a first element may be referred to as a second element.

Terms used herein, including technical or scientific terms, may have the same meaning as commonly understood by those skilled in the art. Some terms defined in a normal dictionary are not to be construed as an ideal or overly formal detect unless expressly defined to the contrary herein.

Hereinafter, embodiments of the present invention will be described in detail with reference to the accompanying drawings.

Before the detailed description, the meaning of some terms used herein will be briefly described. However, it should be noted that the description of terms is not intended to limit the subject matter of the present invention unless explicitly described as limiting the present invention since it is intended to aid understanding of the disclosure.

In addition, the term "unit" used herein refers to a software element or a hardware element, such as a field programmable gate array (FPGA) or an application specific integrated circuit (ASIC), which performs a predetermined function. However, the term "unit" does not always have a meaning limited to software or hardware. A "unit" may be constructed either to be stored in an addressable storage medium or to execute one or more processors. Therefore, a "unit" includes, for example, software elements, object-oriented software elements, class elements or task elements, processes, functions, properties, procedures, subroutines, segments of a program code, drivers, firmware, micro-codes, circuits, data, database, data structures, tables, arrays, and variables. The functions provided by elements and "units" may be combined into those of a smaller number of elements and "units" or separated into those of a larger number of elements and "units".

In addition, all "units" used herein may be controlled by at least one processor, and at least one processor may perform an operation performed by a "unit" used herein.

Embodiments set forth herein may be described in terms of a function or a block performing a function. A block that may be referred to as a 'unit' or a 'module' of the present disclosure may be physically implemented by an analog or digital circuit such as a logic gate, an integrated circuit, a microprocessor, a microcontroller, a memory, a passive electronic component, an active electronic component, an optical component, hardwired circuits, etc., and may be selectively operated by firmware and software.

Embodiments set forth herein may be implemented using at least one software program executed in at least one hardware device, and may perform a network management function to control an element.

Terms used herein, including technical or scientific terms, may have the same meaning as commonly understood by those skilled in the art. Some terms defined in a normal dictionary are not to be construed as an ideal or overly formal detect unless expressly defined to the contrary herein.

Hereinafter, embodiments of the present invention will be described in detail with reference to the accompanying drawings.

In the present disclosure, "characters" are elements constituting a code, and include all or some of an uppercase alphabet, a lowercase alphabet, numbers, and special characters.

In the present disclosure, a "code" refers to a character string in which characters are listed.

In the present disclosure, a "detailed code" refers to some codes included in a virtual code. That is, when the virtual code is generated by combining a plurality of separately generated codes, the detailed codes refer to individual codes that are separately generated and constitute the virtual code.

In the present disclosure, a "unit count" is a unit defined as being set at a specific time interval and changing as the time interval elapses. For example, 1 count may be set and used at a specific time interval (e.g., 1.5 seconds).

In the present disclosure, an "ID (identifier)" refers to a unique code-type value given by a server device so as not to be duplicated for each client device to identify the client device.

In the present disclosure, a "virtual code generation function" refers to a function used to generate a virtual code.

In the present disclosure, a "rolling movement" means that an object performs translational movement while rotating. That is, a "rolling movement" refers to movement caused while a rotational motion and a translational motion are performed together, and means that a rotating object moves while respective points of the rotating object in turn touching an axis.

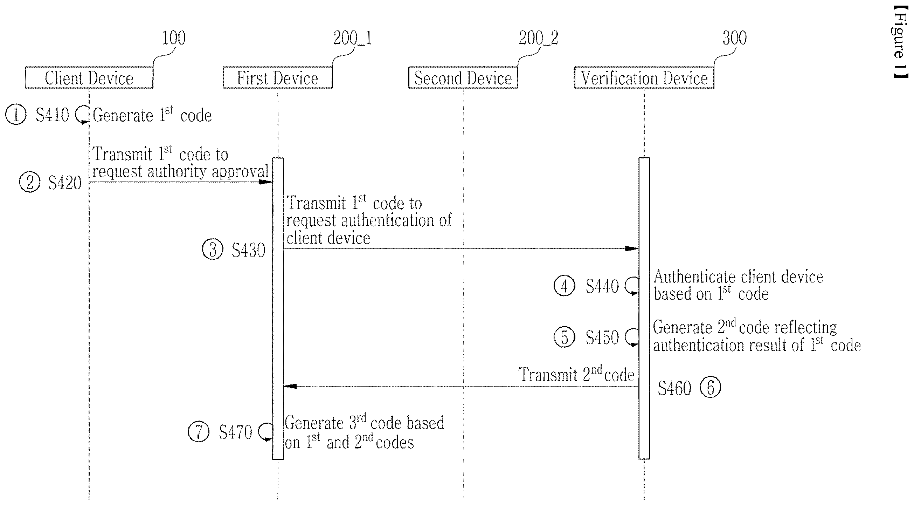

FIG. 1 is a flow diagram schematically illustrating a server-to-server authentication method based on a virtual authentication code according to an embodiment of the present invention.

Referring to FIG. 1, when a client device 100 wants to be authorized to access or use a specific device among a plurality of service devices 200, the client device should be authenticated and verified by a verification device 300. This is because authentication information of the client device 100 stored in the verification device 300 should be used to verify the client device 100. Referring to FIG. 1, the client device generates a first code to obtain authority over a first device and then transmits the first code to the verification device through the first device. In this case, the verification device 300 will perform verification on the client device based on the received first code. If the client device 100 wants to be authorized for a second device 200_2 other than the first device 200_1 among the service devices 200, the client device 100 should generate another first code for authentication and transmit it to the verification device 300 to perform again the verification process. That is, in order to obtain authority over each service device 200, the client device 100 should request an authority approval from the verification device 300 every time. This is inefficient in time, and the efficiency is lowered due to the repeated process. Therefore, in order to solve this problem, the present invention makes it possible to generate a virtual authentication code including authentication information after one authentication of the client device 100 in the verification device 300, and also makes it possible to verify the client device 100 between the service devices 200 without repeated authority approval of the verification device 300 for the client device 100.

Referring to FIG. 1, the above-mentioned technical solution of the present invention can be realized through a third code generated by the first device 200_1 based on a second code generated by the verification device 300. Hereinafter, an embodiment of the present invention will be described in detail.

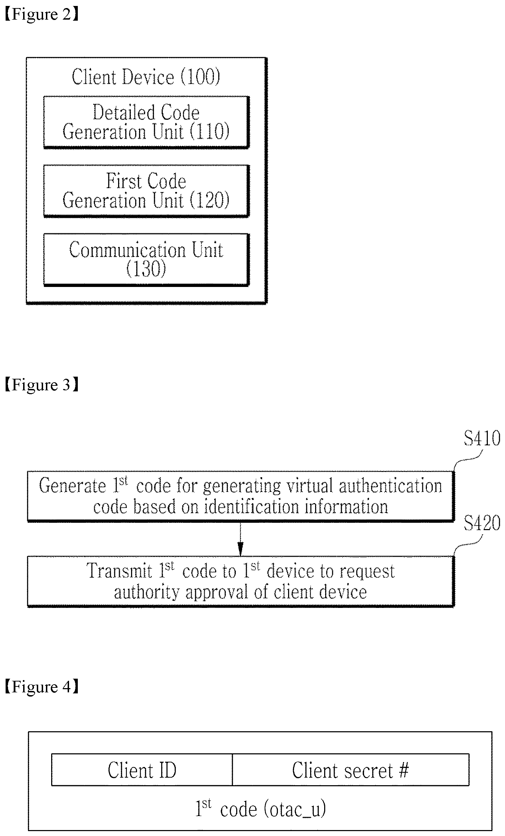

FIG. 2 is a schematic configuration diagram of a client device according to an embodiment of the present invention. FIG. 3 is a flow diagram schematically illustrating a method of requesting authority approval for a first device based on a first code of a client device according to an embodiment of the present invention. FIG. 4 is a schematic configuration diagram of a first code of a client device according to an embodiment of the present invention.

At the outset, a first code is one of virtual authentication codes and refers to a virtual code generated for authentication of a client device. In order to facilitate understanding of the invention, a virtual authentication code for the client device will be referred to as the first code in this description.

Meanwhile, the first code is used by the verification device 300 to authenticate the client device. Specifically, the verification device authenticates the client device by searching for a storage location of authentication information of the client device 100 stored therein in correspondence with identification information of the client device 100 included in the first code.

With reference to FIGS. 2 and 3, the client device 100 and a method of generating the first code of the client device 100 will be described.

Referring to FIG. 2, the client device 100 includes a detailed code generation unit 110, a first code generation unit 120, and a communication unit 130. Meanwhile, the client device 100 may correspond to, but is not limited to, a client server that sends a request for access authority and data use authority for a resource server to a verification server also referred to as an authentication server.

The detailed code generation unit 110 generates a plurality of detailed codes included in the first code. The first code generation unit 120 performs a role of generating the first code by combining one or more detailed codes. In one embodiment, the first code is generated by combining a plurality of detailed codes according to a specific rule.

Meanwhile, the detailed code is changed and generated for each unit count by the client device 100. The unit count refers to what is set at a specific time interval and is changed according to the time interval. For example, assuming that the time interval is 2 seconds, the unit count will be accumulated and calculated whenever 2 seconds elapse.

Referring to FIG. 3, the client device 100 generates the first code, which is a source code for generating a virtual authentication code, based on identification information (S410).

Specifically, the first code generation unit 120 of the client device 100 generates the first code based on the identification information of the client device. At this time, the client device 100 generates the first code according to a first code generation function for approval of access authority over a specific service device. The identification information of the client device 100 may be, but is not limited to, an ID (identifier) and a secret value of the client device set in the verification device.

Referring to FIG. 4, a schematic configuration of the first code is shown. The first code generation unit 120 generates the first code including, but not limited to, the ID of the corresponding client device for the verification device and a hash value.

For example, although not clearly shown in the drawings, in one embodiment of the present invention, a virtual authentication code is generated by applying the ID of the client device to the first code generation function, and then a hash value is calculated by applying the secret value of the client device for the verification device to a hash function. In addition, the first code may be finally generated by combining the virtual authentication code and the hash value.

In addition, although not clearly shown in the drawings, time data may be used in generating the first code. Here, the time data may be, but is not limited to, a time when the client device 100 requests authority approval for the first device. In case where the time data is used, the virtual authentication code is generated by applying the identification information (e.g., ID) of the client device 100 and the time data to the first code generation function. Then, the time data and the secret value of the client device 100 are applied to the hash function to calculate the hash value. The first code may be generated by combining the virtual authentication code and the hash value.

Meanwhile, referring to FIG. 3, the client device 100 transmits the first code to the first device to request authority approval of the client device for the first device (S420). Specifically, the client device 100 transmits the first code to the verification device through the first device, and requests authority approval of the client device for the first device.

Meanwhile, in one embodiment of the present invention, the client device 100 may directly transmit the first code to the verification device 300 to request authority approval for the plurality of service devices 200 registered in the verification device 300. In this case, when authentication for the corresponding client device 100 is completed by the verification device 300, the verification device 300 directly transmits a second code generated based on the first code to the client device 100 rather than the service device 200.

As described above, the client device 100 transmits the first code to the first device for which the access authority is to be approved. In this case, as described above, the first device is determined as a device for which the client device 100 initially requests the approval of access authority, among the plurality of service devices 200. That is, the first device may be determined when the client device 100 transmits the first code in order to request the approval of access authority. However, it is not limited thereto.

For example, when the plurality of service devices 200 interwork in order, that is, if the client device 100 should be first authorized to access and/or use the initial service device 200 to be authorized to access and/or use the remaining service devices 200, the first device may be set in advance. In addition, names of the remaining devices in the service devices 200 including the first device may be determined based on the order.

The communication unit 130 performs a role of transmitting the first code to the verification device 300. The communication unit 130 may include various configurations capable of providing the first code to the outside.

Although not clearly shown in the drawing, all or some of a wireless communication module; a short-range communication module; an IC chip; a magnetic field generator; and a display are included.

The wireless communication module refers to a module for wireless Internet access, and may be installed in or on the mobile terminal 100. WLAN (Wireless LAN) (Wi-Fi), Wibro (Wireless broadband), Wimax (World Interoperability for Microwave Access), HSDPA (High Speed Downlink Packet Access), LTE (Long Term Evolution), LTE-A (Long Term Evolution-Advanced), and the like may be used as wireless Internet technologies.

The short-range communication module refers to a module for short-range communication. Bluetooth, BLE (Bluetooth Low Energy), Beacon, RFID (Radio Frequency Identification), NFC (Near Field Communication), IrDA (Infrared Data Association), UWB (Ultra Wideband), ZigBee, and the like may be used as short range communication technologies.

Hereinafter, a method of generating the first code by the client device 100 based on the detailed code will be described.

Although not clearly shown in the drawings, the first code generation unit 120 performs a role of generating the first code by combining one or more detailed codes. In one embodiment, the first code is generated by combining a plurality of detailed codes according to a specific rule. The first code generation function includes a rule (i.e., a detailed code combining function) for combining a plurality of detailed codes.

Various methods may be applied as a method of generating one virtual code by combining a plurality of detailed codes.

In one embodiment, the client device 100 may include a program (i.e., an application) that generates a virtual authentication code, that is, the first code, for authentication of the client device.

The detailed code generation unit 110 performs a role of generating one or more detailed codes based on the identification information (identifier, secret, etc.) of the client. The first code generation function includes one or more detailed code generation functions. For example, when the first code includes a plurality of detailed codes, the first code generation function generates the plurality of detailed codes by using a plurality of detailed code generation functions, and generates the first code by using a detailed code combination function for combining the plurality of detailed codes.

In this case, the first code is generated for each unit count by a dedicated program built-in or installed in the client device 100.

In one embodiment of the present invention, the client device 100 may use identification information of the client device, for example, the ID (identifier) of the client device, as one of seed data of the first code generation function. As a specific example, the detailed code generation unit 110 generates each detailed code by using, as the seed data of each detailed code generation function, a combined serial number that is obtained using a single detailed code generation function to combine the ID of the client device and a serial number of the dedicated program built-in or installed in the client device 100.

In one embodiment, the detailed code generation unit 110 may generate a first detailed code and a second detailed code, including a first detailed code generation function and a second detailed code generation function as the detailed code generation functions. In this case, the client device 100 merely includes the first detailed code generation function for generating the first detailed code and the second detailed code generation function for generating the second detailed code as the detailed code generation functions in order to enhance security, but may not include data on the correlation between the first detailed code and the second detail code.

The first code generation unit 120 performs a role of generating the first code by combining one or more detailed codes by using the first code generation function. In one embodiment, the first code is generated by combining a plurality of detailed codes according to a specific rule. The first code generation function includes a rule (i.e., a detailed code combining function) for combining the plurality of detailed codes. That is, the first code generation unit 120 may combine one or more detailed codes by using the detailed code combining function included in the first code generation function.

In one embodiment of the present invention, when the first code is generated as a combination according to a specific rule of the first detailed code and the second detail code, the first detailed code and the second detailed code may each perform a role of searching for a storage location of client authentication information in a storage location search algorithm in which client information is stored. For example, the first detailed code sets a starting point of a storage location search, and the second detailed code sets a search path from the starting point to the storage location of the authentication information of the client device according to a specific search scheme. That is, when the first code that is normally generated for each unit count is provided by the client device 100, the verification device 200 determines a point moved from the search starting point corresponding to the first detailed code along the search path corresponding to the second detailed code as a point where authentication information of the client device is stored (i.e., the storage location of the authentication information of the client device). A detailed method of searching for the storage location of the authentication information of the client device based on the first and second detailed codes constituting the first code will be described later.

As one embodiment of a method in which the detailed code generation unit 110 generates a detailed code, the detailed code generation unit 110 generates a new detailed code for each unit count, and accordingly the client device 100 generates a new first code for each count. The first code newly generated for each unit count is not duplicated. Specifically, the detailed code generation unit 110 may be set so that the first code newly generated for each unit count is not duplicated for a predetermined period in a specific client device 100.

As one embodiment of the present invention, in connection with the method of generating a plurality of detailed codes based on the identification information of the client device 100 and ultimately generating the first code, it is possible to generate the first detailed code based on the ID of the client device 100 for the verification device 300, generate the second detailed code based on the above-described time data, and generate the first code in which the first detailed code and the second detailed code are combined. However, it is not limited thereto.

Hereinafter, a method of the verification device 300 that verifies the client device 100 based on the first code, extracts role information of the client device 100 for at least one service device 200, and generates a second code based on the role information will be described in detail.

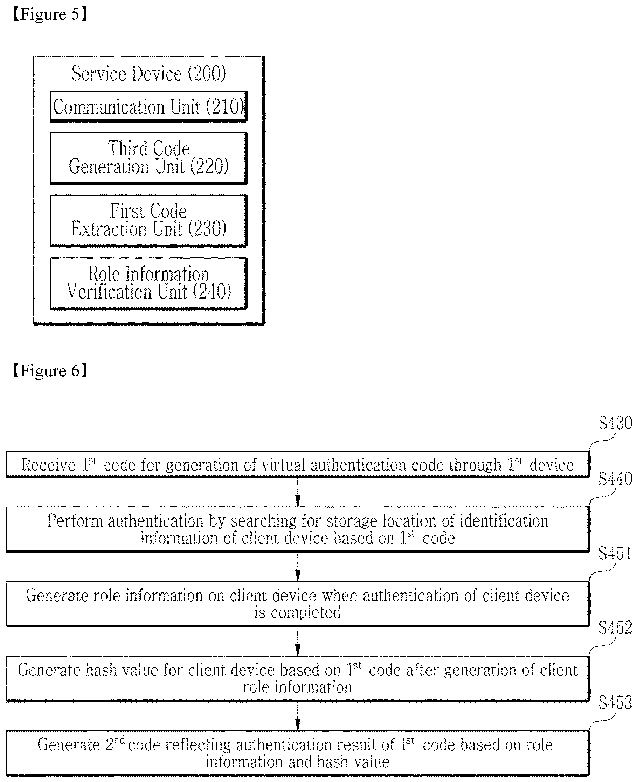

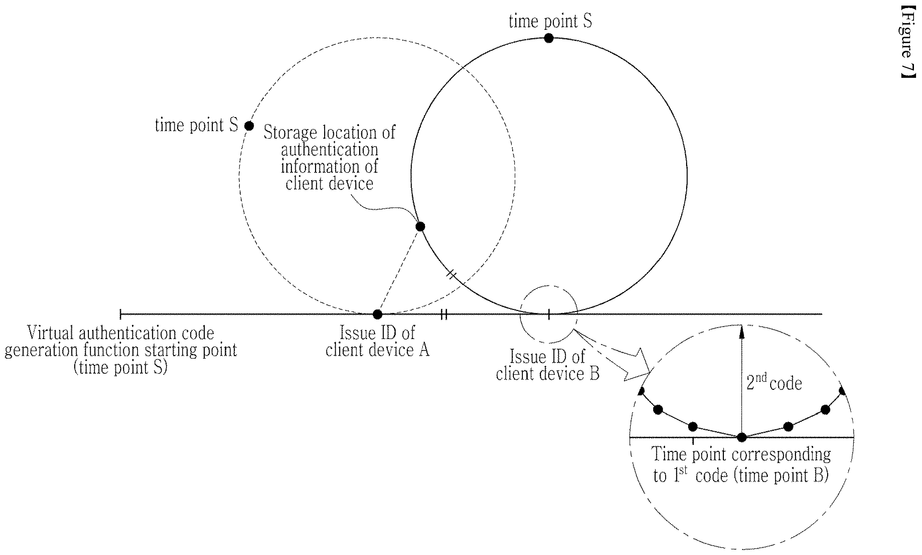

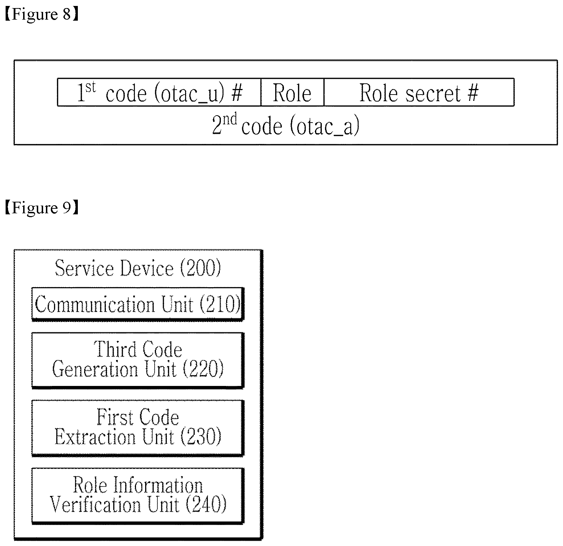

FIG. 5 is a schematic configuration diagram of a verification device according to an embodiment of the present invention. FIG. 6 is a flow diagram schematically illustrating a method of generating a second code by verifying a client device based on a first code according to an embodiment of the present invention. FIG. 7 is an exemplary diagram of a storage location search algorithm for searching for a storage location of authentication information on a client device through a rolling movement of a k-gon according to an embodiment of the present invention. FIG. 8 is a schematic configuration diagram of a second code generated by a verification device according to an embodiment of the present invention.

Referring to FIG. 5, the verification device 300 includes a communication unit 310, a detailed code extraction unit 320, an authentication information search unit 330, and a second code generation unit 340. The verification device 300 may be a server device. For example, when the client device 100 is a client server using the OAuth authentication scheme, the verification device 300 may be, but is not limited to, a verification server that assigns and manages the access authority of the client device 100 for a resource server.

Referring to FIG. 6, the verification device 300 receives the first code, which is a source code for the generation of the virtual authentication code, from the client device through the first device (S430). As described above, the first code is generated based on the identification information of the client device.

Specifically, the verification device 300 receives an authentication request of the client device 100 for the first device 200_1. Then, the verification device 300 verifies whether the client device 100 corresponds to a trusted device registered in the verification device 300. That is, the verification device 300 extracts stored authentication information of the client device 100 based on the first code, and compares it with the identification information of the client device 100 included in the first code. If the authentication information and the identification information are identical or match appropriately, the authentication of the client device 100 will be completed.

Meanwhile, the fact that the client device 100 has been authenticated does not mean that the authority of the client device 100 has been approved for the first device. This is because, among all the service devices 200, there may be any device for which the access authority of the client device 100 is not recognized. For example, assuming the OAuth authentication scheme, for a server that has not obtained an access token from the verification server, even if the client ID and password of the client server are authenticated, the authority to the server cannot be recognized. Hereinafter, a process of performing authentication and generating role information by the verification device 300 will be described in detail.

Referring to FIG. 6, the verification device 300 searches for a storage location of the authentication information of the client device 100 based on the first code received from the first device and thereby performs the authentication of the client device (S440).

The authentication information of the client device 100 refers to information provided when the client device 100 registers with the verification device 300, and corresponding to identification information capable of identifying a specific client device. For example, the authentication information may be a serial number of the client device 100 itself, an issued ID (e.g., a client ID), a secret value (e.g., a client secret) related to the corresponding ID (identifier), and the like.

Specifically, referring again to FIG. 4, the first code is a virtual authentication code generated based on the identification information of the client device 100. The first code may include an ID (identifier) and a secret value (secret) of the client device 100 for the verification device 300. The verification device 300 searches for stored authentication information of the client device 100, for example, a storage location of the stored ID and secret value. In addition, the verification device 300 may perform authentication for the client device 100 by comparing an identification value included in the first code with an identification value stored in the storage location.

In another embodiment, the authentication information search unit 330 of the verification device 300 may include the same function as the first code generation function of the client device 100. In this case, the verification device 300 may extract the identification information of the client device 100 by applying the received first code to the first code generation function. For example, the ID (identifier) of the client device 100 will correspond to this. In this case, the authentication information search unit 330 searches for a storage location of the authentication information of the client device 100 that matches the ID (identifier). Then, the secret value of the client device 100 is extracted from the authentication information storage location. The extracted secret value is applied to a hash function to calculate a hash value. The calculated hash value is compared with a hash value in the first code, so that the authentication of the client device 100 may be completed.

Meanwhile, as described above, time data may be used in the first code generation process. In case of performing the authentication of the client device 100 based on the first code generated using time data, the time data (a time point when the client device 100 requests authority approval for the first device) and the secret value extracted from the storage location are applied to the hash function to calculate a hash value, which is then compared with a hash value in the first code to complete the authentication of the client device 100.

In order to perform the above-described authentication, the hash functions of the client device 100 and the verification device 300 may correspond to the same function.

Hereinafter, a specific method in which the verification device 300 searches for a storage location of the identification information based on the detailed code of the client device 100 will be described.

The detailed code extraction unit 320 extracts a plurality of detailed codes included in the first code. The first code is generated by combining a plurality of detailed codes according to a specific rule.

The detailed code extraction unit 320 of the verification device 300 includes the same detailed code combining function as that of the client device 100, and may apply the detailed code combining function to extract a plurality of detailed codes from the first code. For example, in case where the client device 100 generates the first code in which two detailed codes (i.e., the first detailed code and the second detailed code) are combined, the detailed code extraction unit 220 may apply the detailed code combining function to a character string array to separate the first detailed code and the second detailed code.

The authentication information search unit 230 searches for a storage location of the client device 100 based on a plurality of detailed codes. Various schemes may be applied as a scheme in which the authentication information search unit 230 searches for the storage location of the authentication information based on each detailed code. In order for the authentication information search unit 230 to search for the storage location based on the plurality of detailed codes, detailed codes may have a correlation.

When the first code is composed of a first detailed code and a second detailed code, in one embodiment where the detailed codes has a correlation, the authentication information search unit 230 may determine a search starting point corresponding to the first detailed code, and find a point moved from the search starting point along a search path corresponding to the second detailed code as the storage location of the authentication information of an actual code. That is, the detailed code may include the first detailed code for setting the starting point of the storage location search and the second detailed code for setting the search path from the starting point to the storage location according to a specific search scheme.

In another embodiment, as the client device 100 provides a new first code for each unit count, the first detailed code and the second detailed code for searching for the storage location by the verification device 300 are changed every time the unit count elapses. The verification device 300 may search for the storage location of the authentication information of the client device 100 by setting the search starting point and the search path based on the first and second detailed codes that are changed for each count.

In still another embodiment, the authentication information search unit 230 may include a storage location search algorithm to find the storage location of the authentication information by using a plurality of detailed codes having a correlation. The storage location search algorithm is an algorithm that enables searching for the storage location of authentication information when applying each detailed code included in the first code.

For example, if the first code includes the first detailed code for determining the search starting point of the storage location of the authentication information and the second detailed code for indicating the direction of the storage location from the search starting point, the storage location search algorithm is an algorithm that adjusts so that the storage location where the authentication information of the client device 100 is matched is placed to a location indicated in the direction corresponding to the second detailed code from the point corresponding to the first detailed code.

According to the use of the storage location search algorithm, the verification device 200 can find the storage location of the authentication information of the client device 100 or a point matched with the storage location even if the first and second detailed codes included in the first code are changed. Various schemes may be applied to the storage location search algorithm, and a specific example will be described later. However, the storage location search algorithm is not limited to the example described later.

Referring to FIG. 7, if the storage location search algorithm is a k-gon (k is $M^N$) that makes rolling movement along a track where $M^N$ codes corresponding to the first detailed code are arranged, and if the vertices of the k-gon move while meeting points where the codes are arranged on the first detailed code track, each vertex of the k-gon may match the storage location of the client authentication information, and a point at which the first detailed code track (i.e., a first track) and the k-gon meet may be the starting point for searching for the storage location corresponding to the first detailed code. In this case, the authentication information search unit 230 may apply the rolling movement of the k-gon so that the vertices of the k-gon are to meet the points corresponding to the first detailed codes extracted by the detailed code extraction unit 220. Therefore, when an angle corresponding to the second detailed code (e.g., a specific angle obtained by dividing 180 degrees into $M^N$ to face the vertex of the k-gon) is indicated at the position on the first track where the k-gon is in contact, the authentication information search unit 230 may find the k-gon vertex which is the storage location where the authentication information of the client device 100 corresponding to the first code is stored.

Specifically, as shown in FIG. 7, the verification device 300 performs the rolling movement of the k-gon toward a point corresponding to the first detailed code (that is, moves the k-gon so that the vertices of the k-gon sequentially meet respective points on the track). After that, the verification device 200 searches for a vertex corresponding to the storage location of the authentication information of the client device 100 by instructing the angular direction corresponding to the second detailed code. For example, a client device B registers with the verification device 200 to receive an ID (identifier) and a secret value, and when 2 counts elapse, the client device B generates a second detailed code with 2 counts applied as a function value and provides it to the verification device 200. The verification device 200 matches the second detailed code generated by the second detailed code generation function for each count to an angle facing each vertex from the point where the k-gon and the track meet (that is, when the k-gon moves with rolling by n counts, matches the second detailed code, to which the n counts are applied, to an angle facing the rolling-moved n-th vertex) and stores it. Accordingly, the verification device 300 may search for the vertex of the k-gon corresponding to the actual code storage location by applying the angle corresponding to the second detailed code to the corresponding point of the first detailed code.

Meanwhile, in another embodiment of the present invention, the first detailed code and the second detailed code may be codes for a reference count added as much as a virtual security code (e.g., an OTP code) randomly generated from a time point when the authentication information of the client device 100 is registered or when the authentication of the client device 100 is requested (e.g., a time point when the client device 100 generates the first code).

In a specific embodiment, the client device 100 reflects the virtual security code on the first detailed code and the second detailed code without outputting it to the outside. Based on a combination of a serial number (i.e., a unique value) in the client device 100 and some of the identification information of the client device 100, or based on a combination of a serial number of the client device 100 and a serial number of a program in the client device 100, the verification device 300 generates a virtual security code value (e.g., OTP code). Also, the verification device 300 generates the first detailed code of a count obtained by adding the virtual security code value to a registration time of the authentication information of the client device, and generates the second detailed code of a count corresponding to the virtual security code value (that is, generates the virtual security code itself as the second code).

That is, the first and second detailed codes are generated, based on a count shifted by the virtual security code value from the time point A when the authentication information of the client device is registered in the verification device 300 by the client device 100 (or a time point when the ID (identifier) for the client device is issued by the verification device). The count shifted by the virtual security code value from the time point A may be a count before or after a count corresponding to the current time point depending on the generated virtual security code value.

The verification device 300 may search for the storage location (or registration location) of the authentication information of the client device 100 by applying the first and second detailed codes included in the received first code to the storage location search algorithm.

In another embodiment, the verification device 300 extracts a virtual security code from the second detailed code generated based on the virtual security code, and then checks whether there is a value equal to the virtual security code among OTP numbers calculated by inputting a count within a specific range from a count receiving the first code into the virtual security code generation function (i.e., OTP function). Also, the verification device 300 obtains a virtual security code value (i.e., an OTP function value) used to generate the second code by applying the inverse function of the second function to the second code, and find a count calculating the same value as the virtual security code value.

Due to a transmission time or delay of the first code, there is a difference between a time point when the client device 100 generates the virtual security code and a time point when the verification device 300 receives the virtual security code (exactly, a time point of receiving the first code including the virtual security code). Therefore, a count at which the verification device 300 receives the first code and a count at which the OTP number corresponding to the virtual security code is generated may not match.

Thus, the verification device 300 allows an error range from the count of receiving the first code. Through this, the verification device 300 can prevent attempts to authenticate the client device with the first code generated previously, not the first code generated currently, so that security may be improved.

Also, in another embodiment, the client device 100 may generate the first detailed code that corresponds to a count obtained by adding the virtual security code number generated using as seed data a part or a combination of both of the identification information of the client device 100 and a serial number (i.e., a unique value) in the client device 100 or a dedicated program at the time when authentication of the client device is requested or authority approval is requested. In this case, the second detailed code that corresponds to a count obtained by adding the virtual security code value and a count difference between a time point (time point A) when the identification information of the client device is registered and a time point (time point B) when the authority approval is requested is generated. That is, the equation for generating the first and second detailed codes by the dedicated program in the client device 100 that generates the first code is as follows.

$$\text{First Detailed Code} = f1 \ (\text{Count of Time Point B} + \text{Virtual Security Code})$$

$$\text{Second Detailed Code} = f2 \ (\text{Count of Time Point B} - \text{Count of Time Point A} +$$
$$\text{Virtual Security Code})$$

(Time Point A: Time point when the authentication information of the client device is registered, Time Point B: Time point when the authority approval of the client device is requested, Virtual Security Code: OTP number)

The verification device 300 searches for a location where information of the client device is stored, based on the first detailed code and the second detailed code in the received first code, and extracts seed data (i.e., what is used for generating the first code among a serial number of the first code generation dedicated program or client device, client device information, and a combined serial number of a serial number of the first code generation dedicated program and a serial number of the client device) stored at the location. Based on the seed data, the verification device 300 generates the virtual security code (i.e., OTP number) within a specific count range from the time point when the authority approval request is received.

Thereafter, the verification device 300 searches for a point where the information of the client device is stored, based on the first and second detailed codes, and thereby detects a time point (time point A) of registering the client device authentication or identification information. The verification device 300 calculates each value corresponding to the sum of the virtual security code (i.e., OTP number) and the number of counts from the authentication information registration time point (time point A) of the client device to each count within a specific count range based on the time point of receiving the authority approval request. The verification device 300 checks whether there is a count equal to the number of counts (i.e., a value obtained by applying the inverse function of the second function to the second code) corresponding to the second detailed code among each calculated value. Through this, the verification device 300 may check whether the first code is normally provided.

Meanwhile, when authentication for the client device 100 is completed, the verification device 300 generates the second code to be used for generating a third code to be described later (S450).

Referring to FIG. 6, when authentication of the client device is completed, the verification device 300 generates role information on the client device (S451). In this case, the role information may be matched with the identification information of the client device 100 and stored. For example, it may be stored in connection with an ID (identifier) or secret value of the client device 100 stored in the verification device 300. Therefore, when the authentication of the client device 100 is completed, the verification device 300 extracts the stored role information matched with or connected to the corresponding authentication information.

The role information includes authority information of the client device 100 for the service device 200. The authority information not only includes information (e.g., a service device list) on the service device 200 to which the client device 100 has access or use authority, but also includes information on a scope that the client device 100 can access or use.

Meanwhile, in case of role information, a role ID (role identifier) and a role secret value (role secret), which correspond to the role information, may be set. The role ID (role identifier) and the role secret value (role secret) are set for each client device 100. In one embodiment of the present invention, the role ID (role identifier) and role secret value (role secret) of each client device 100 may be stored at the storage location of the authentication information of each client device 100, or may be stored while being matched with the ID of each client device 100. However, it is not limited thereto.

Referring again to FIG. 6, the verification device 300 extracts the role information on the client device for which authentication has been completed, and then generates a hash value for the client device based on the first code (S452).

That is, each verification device 300 calculates a hash value by applying the first code to the hash function. In this case, according to one embodiment of the present invention, the service device 200 may include the same hash function as the hash function of the verification device. Meanwhile, because the hash value is generated based on the first code, it is matched with respect to the client device 100. As described above, because the first code is generated based on the identification information of each client device 100, the first codes of respective client devices 100 are different. Therefore, the hash values generated based on the first codes are also different for respective client devices 100.

After the hash value is generated, the second code generation unit 340 of the verification device 300 generates, based on the generated role information and hash value, the second code in which the authentication result for the first code is reflected. That is, the verification device 300 may generate the second code, based on the second code generation function (S453).

Referring to FIG. 8, the second code may include a second hash value calculated by applying the first code to the hash function, and a third hash value calculated by applying the role information (e.g., role ID) for the corresponding client and a secret (e.g., role secret value) for the role information to the hash function.

The hash value generated based on the first code is then used by the service device 300 to verify the client device 100 and approve the authority. Specifically, the service device 300 extracts the first code included in the third code and generates a hash value. Then, the service device 300 compares the generated hash value with the hash value generated by the verification device 300 based on the first code received from the client device 100, and thereby performs authentication and verification for the client device 100. This will be described in detail later.

In one embodiment of the present invention, a virtual authentication code may be generated by applying the role information for the client to the second code generation function, and then the second and third hash values may be combined to finally generate the second code.

Although not clearly shown in the drawings, the second code may include a plurality of detailed codes. In this case, the plurality of detailed codes may be generated while being changed for each unit count by the verification device. The unit count may be set at a specific time interval and changed as the time interval elapses. That is, similar to generating the first code based on the detailed code of the client device 100, the second code generated by the verification device 300 may also include the plurality of detailed codes. In one embodiment, the first code is generated by combining the plurality of detailed codes according to a specific rule. For this, although not clearly shown in the drawings, the second code generation function may include a rule (i.e., a detailed code combining function) for combining the plurality of detailed codes. The method of generating the virtual authentication code by combining the detailed codes is described above, and thus will be omitted below.

Meanwhile, in one embodiment of the present invention, the detailed code included in the second code includes a plurality of first detailed codes and second detailed codes having a correlation with each other. The first detailed code may determine a search starting point for the role information of the client device in the verification device, and the second detailed code may determine a search path for the role information from the search starting point. If the first and second detailed codes included in the first code are used to search for the authentication information of the client device 100, the first and second detailed codes included in the second code may be used to search for the role information of the client device 100.

Meanwhile, the role information of the client device may be stored at the storage location of the authentication information of the client device, or may be stored while being matched with or connected to the storage location of the authentication information according to an embodiment.

Referring again to FIG. 6, the verification device 300 transmits the second code to the first device so that the first device 200_1 generates the third code, which is a virtual authentication code, based on the second code (S460).

Meanwhile, the second code may further include validity time information on the second code. In this case, when a validity time of the second code for the first code received from the first device 200_1 has expired, and when a request to update the expired second code, the verification device 300 may perform authentication of the client device by determining whether the first code received from the first device is identical with the previously stored first code. When the authentication of the client device 100 is completed, the second code is updated and then transmitted to the first device. This will be described in detail later.

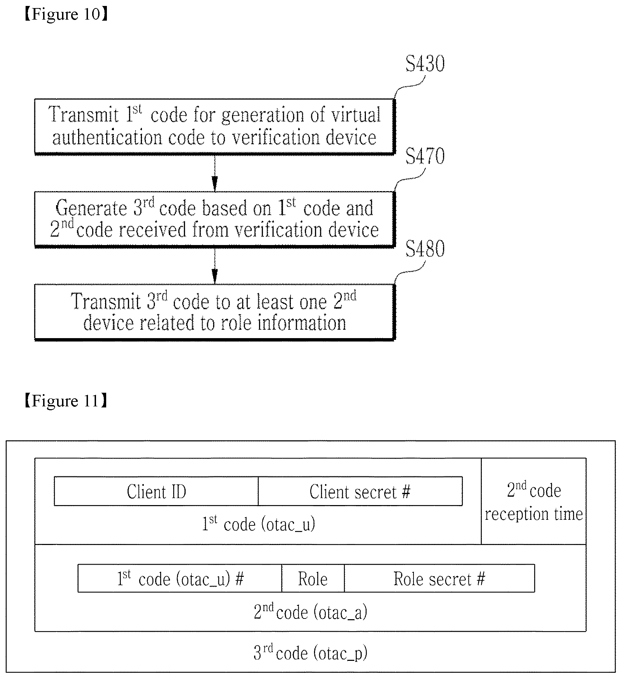

FIG. 9 is a schematic configuration diagram of a service device 200, FIG. 10 is a flow diagram schematically showing a method of generating a third code, which is a virtual authentication code, based on a first code and a second code by a first device, and FIG. 11 is a schematic configuration diagram of a third code.

Referring to FIG. 9, the service device 200 includes a communication unit 210, a third code generation unit 220, a first code extraction unit 230, and a role information verification unit 240. Meanwhile, the service devices 200 are divided into a first device and a second device in this description depending on the request for authority approval from the client device 100, but this is merely for understanding of the invention. That is, the first device 200_1 and the second device 200_2 are devices that provide a service interworking with the verification device 300. For example, in case of the Oauth authentication scheme, respective resource servers may correspond to the first and second devices. The respective resource servers may be provided on the same platform, or may be provided on different platforms. However, it is not limited thereto.

Referring to FIG. 10, the first code, which is a source code for generating a virtual authentication code received from the client device 100, is transmitted to the verification device 300 through the communication unit 210 (S430).

The first code is generated based on the identification information of the client device, and is used for authorization of the client device 100 through verification of the first code in the verification device 300. Although not clearly shown in the drawings, the first device may store the first code in a memory (not shown) to generate the third code.

Meanwhile, the first device 100_1 receives from the verification device 300 the second code reflecting the authentication result for the first code (S460). In this case, the second code includes a hash value and role information for the client device 100 generated by the verification device 300 based on the first code.

As described above, the second code includes the hash value generated based on the first code generated by the client device 100 and the role information extracted after the verification device 300 completes the authentication of the client device 100. This is described above, so that a detailed description will be omitted.

Specifically, when receiving the second code reflecting the authentication result for the first code from the verification device 300, the first device 200_1 approves the authority of the client device 100 for the first device. At this time, the first device 200_1 may verify the role information of the client device 100 for the first device in the second code through the role information verification unit 240. In more detail, it will be determined from the role information whether the first device is included in the service devices 200 to which the client device 100 has access and/or use authority. Also, based on the role information, the scope of the access and/or use authority of the client device 100 for the first device may be verified. Then, upon completion of the role verification, the client device 100 will approve the authority of the client device 100 for the first device.

Referring to FIG. 10, the third code, which is a virtual authentication code, is generated based on the first code and the second code (S470). The third code refers to a virtual authentication code used in a server-to-server authentication process.

Meanwhile, referring to FIG. 11, in one embodiment of the present invention, the third code may be generated based on, together with the above-described first and second codes, a time (time stamp) of receiving the second code from the verification device 300 or a time (time stamp) of generating the second code in the verification device.

For example, referring to FIG. 11, the third code may further include information on a time (time stamp) of completing authentication for the client device 100 in the verification device 300 or information on a time (time stamp) of generating the second code after verification.

This is to approve the authority for the client device 100 through the third code finally generated based on the verification result for the client device 100 when the authority approval of the client device 100 for each service device 200 is not completed within the unit count or a predetermined count. Each service device 200 may determine whether the third code and the second code included in the third code are normally generated for authorization, based on the authentication completion time (time stamp) in the third code or the generation time (time stamp) of the second code. Specifically, it may be determined whether the third code and the second code are generated in response to the request for authority approval from the client device 100. In order for the plurality of service devices 200 to perform authentication and authority approval for the client device 100, it is necessary to determine whether the second code reflecting the authentication result of the verification device 300 for the client device 100 is valid. This is to determine based on the generation time (time stamp) included in the third code.

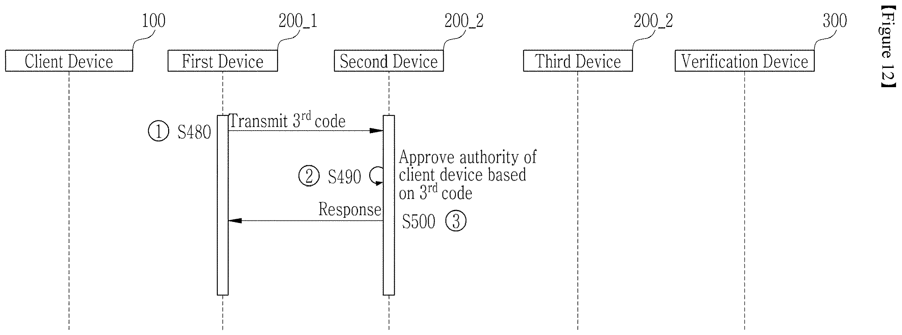

FIG. 12 is an exemplary diagram schematically illustrating a server-to-server authentication method based on a third code according to an embodiment of the present invention.

In case of the first device for which the client device 100 initially requests authority approval, the verification device 200 can authenticate the client device 100 and grant authority. However, referring to FIG. 12, because the third code generated by the first device 200_1 includes the first code related to authentication information of the client device 100 and the second code related to role information, the service devices 200 other than the first device 200_1 can perform authentication and authority approval for the client device 100 without the involvement of the verification device 300. This will be described in detail later.

In another embodiment of the present invention, although not clearly shown in the drawings, the third code may be generated by the client device. For this, the first device 200_1 may transmit the second code, received from the verification device 300, to the client device 100. In this case, depending on the third code generation method, the first device 200_1 may transmit the time information about receiving the second code from the verification device or the second code generation time information in the verification device to the client device 100 together with the second code. Meanwhile, the third code generation method of the client device 100 differs only from the above-described third code generation method of the first device in terms of a generation entity, so that a detailed description thereof will be omitted.

Meanwhile, the first device transmits the third code to at least one second device 200_2 related to the role information (S480).

In one embodiment of the present invention, the first device 200_1 may identify at least one second device 200_2 capable of authenticating the authority of the client device 100, based on the role information of the second code included in the third code, and then transmit the third code to the second device 200_2. However, it is not limited thereto.

Meanwhile, referring to FIG. 12, it is shown that the first device 200_1 transmits the third code to one second device, but it is possible to transmit the third code to a plurality of second devices 200_2 among the service devices, based on the role information of the client device 100. Through this, the client device 100 may be granted access authority without accessing the verification device 300 for authority authorization for each service device 200.

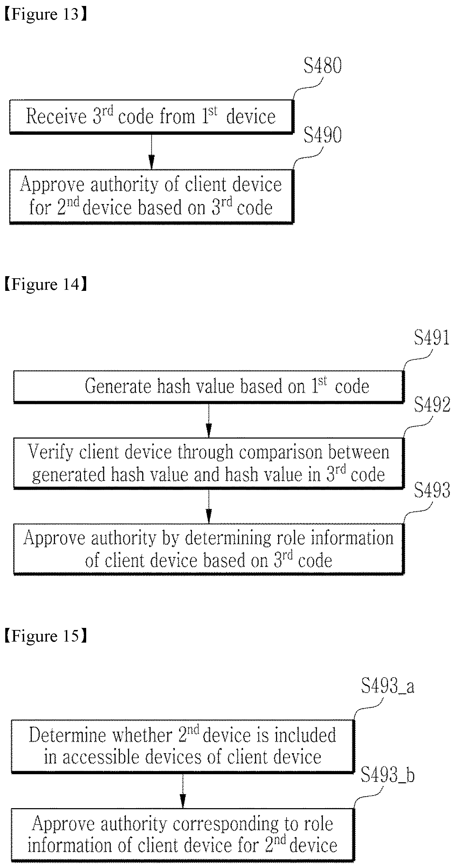

FIG. 13 is a flow diagram schematically illustrating a server-to-server authentication method based on a third code according to an embodiment of the present invention. FIG. 14 is a flow diagram schematically illustrating a method of approving authority over a client device based on a third code according to an embodiment of the present invention, and FIG. 15 is a flow diagram schematically illustrating a method of approving authority over a client device based on a third code.

Referring to FIG. 13, the second device 200_2 receives the third code, which is a virtual authentication code, from the first device (S480). Then, based on the third code, the second device 200_2 approves the authority of the client device 100 for the second device 200_2 (S490).

Referring to FIG. 14, at step S490, a hash value for the client device is generated based on the first code used to generate the third code and included in the third code (S491), and the client device is verified through comparison between the generated hash value and a hash value in the third code (S492). Then, based on the third code, the role information for the client device is determined and the authority of the client device is approved (S493).

Specifically, the second device 200_2 extracts the first code included in the third code. Then, the hash value is calculated by applying the first code to the hash function. For this, all service devices 200 including the second device include the same hash function as that of the verification device 300. Meanwhile, the second code in the third code is extracted after the hash value is extracted, and a hash value included in the second code is compared with the calculated hash value by applying the hash function in the second device 200_2. If the two hash values match, the client device is authenticated and the role information for the client device is determined. As described above, because the second code includes the role information (e.g., the role ID and the role secret value), the authority of the client device 100 for the second device is approved based on the role information.

Meanwhile, in one embodiment of the present invention, the third code may be generated based on the first code, the second code, and time data of receiving the second code. In this case, the authority approval step may be to approve the authority of the client device, based on a time when the second code and the role information for the client device 100 are received based on the third code. That is, the second device 100_2 may verify the validity of the second code, based on the reception time data of the second code, and then approve the authority over the client device 100 based on the role information included in the second code.

Meanwhile, referring to FIG. 15, in one embodiment of the present invention, the authority approval step (S493) may include determining whether the second device is included in accessible devices of the client device, based on the third code (S493_a), and approving the authority corresponding to the role of the client device for the second device, based on the second code and the time data included in the third code (S493_b).

In detail, it will be determined whether the second device is included in the service devices 200 with access and/or use authorities of the client device 100 included in the role information. Also, based on the role information, the scope of the access and/or use authorities of the client device 100 for the second device may be verified. Then, upon completion of the role verification, the authority of the client device 100 for the second device will be approved.

Although not clearly shown in the drawings, the service device 200 may further include a detailed code extraction unit (not shown).

That is, when the second code generated by the verification device 300 includes a plurality of detailed codes, the service device 200 may extract the detailed code and search for a storage location of the role information. This is similar to the method of extracting the detailed code in the verification device 300 and searching for the storage location of the authentication information of the client device 100 when the first code includes a plurality of detailed codes, so that a detailed description will be omitted.

Meanwhile, in one embodiment of the present invention, the second code may further include valid time information on the second code. That is, although not clearly shown in the drawing, the verification device 300 may further include valid time information of the second code when generating the second code. In this case, when the valid time of the second code in the third code received from the first device 200_1 expires, the second device 200_2 returns the received third code to the first device 200_1 and requests to update the second code.

The first device 200_1 receives the third code for updating the expired second code from the second device 200_2, and transmits the first code included in the third code to the verification device 300. Based on the first code, the verification device 300 performs authentication of the client device 100 again. In addition, when the authentication of the client device 100 is completed, the second code is updated and then the updated second code is transmitted to the first device. The method of updating the second code is the same as the method of generating the second code, so a detailed description thereof will be omitted.

Meanwhile, the verification device 300 receives the first code from the first device 200_1, and stores the first code. If the update request of the second code is received from the second device 200_2 through the first device 200_1, the verification device 300 may check the validity through direct comparison between the stored first code and the first code received from the first device 200_1.

If the update process of the second code by the verification device 300 is stopped or the update is not allowed, the verification and authorization process for the client device 100 in the second device 200_2 is stopped.

Meanwhile, when receiving the updated second code from the verification device 300, the first device 100_1 regenerates the third code, based on the first code, the second code, and reception time data of the updated second code, and then transmits the regenerated third code to the second device 100_2. Through this, the second device 100_2 may perform again the authentication and authority approval process for the client device 100.

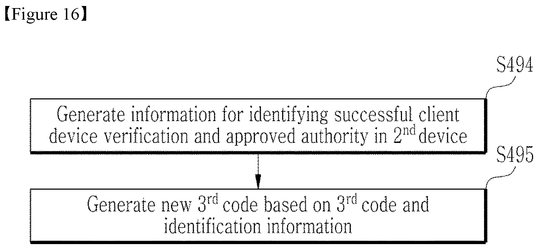

FIG. 16 is a flow diagram schematically illustrating a generation of a new third code based on verification and authority approval information of a client device by a second device of the present invention.

The second device 200_2 that completes verification and authority approval for the client device 100 may generate a new third code for authentication of the client device 100 for another device in the service devices 200. For example, there may be a third device (not shown) capable of approving the authority over the client device 100 only when authentication of the client device 100 for the second device 200_2 is completed based on the third code of the first device 200_1. In this case, based on the third code received from the first device 200_1, the second device 200_2 may generate a new third code together with information indicating that the verification and authority approval of the client device 100 for the second device 200_2 has been completed.

Referring to FIG. 16, information for identifying a successful client device verification and the approved authority is generated, and a new third code for the second device is generated based on the third code and the identification information.

Specifically, after the verification of the client device 100 for the second device 200_2 is completed, the second device 200_2 generates information that the authority approval for the second device 200_2 has been completed. Then, the new third code including the corresponding information is generated and transmitted to another device (e.g., the third device) in the service devices 200 that requires authentication of the client device 100.

This is, when the plurality of service devices 300 sequentially require authentication for the client device 100, to enable the $N+1^{th}$ service device to recognize that the $N^{th}$ (N is a natural number of 2 or more) service device has completed verification and authority approval for the client device 100 based on the third code received from the $N-1^{th}$ service device. For this, a new third code may be generated and transmitted to the $N+1^{th}$ device based on information for authenticating the completion of authority approval and the third code received from the $N-1^{th}$ device.

Meanwhile, although the sequential authentication and verification situation for the client device 100 at the plurality of service devices 200 has been exemplarily described in the above embodiment, the service device B may generate a new third code and transmit it to the service device A even when the service device A (200_A) requires in advance verification and authorization of the client device 100 for another service device B (200_B).

The device-to-device authentication method based on the virtual authentication code according to the described above embodiment of the present invention may be implemented with a program (or application) and stored in a medium in order to be executed by being combined with a server that is hardware.

In order to allow the computer to read the program and execute the methods implemented with the program, the above-described program may include codes encoded in computer languages such as C, C++, JAVA, and machine language which can be read through a device interface of the computer by a processor (CPU) of the computer. This code may include a functional code related to a function or the like that defines functions required to execute the methods, and may include an execution procedure-related control code necessary for the processor of the computer to execute the functions in accordance with a predetermined procedure. Also, such a code may further include a memory reference related code as to which additional information or media required for the processor of the computer to execute the above-described functions should be referenced at any location (address) of the internal or external memory of the computer. In addition, when the processor of the computer needs to communicate with any other computer, server, etc., which are at remote locations, to perform the above-described functions, the code may further include a communication-related code as to how to communicate with which remote computer, server, etc., what information or media should be transmitted or received during communication, and the like.

The recording medium refers to a specific medium that semi-permanently stores data and can be read by an apparatus, rather than a medium, such as a register, a cache, or a buffer, which temporarily stores data. Specifically, the recording medium may include, but is not limited to, a ROM, a RAM, a CD-ROM, a magnetic tape, a floppy disk, an optical data storage device, and the like. That is, the program may be stored in various recording media on various servers to which the computer can access, or in various recording media on the user's computer. In addition, the media may be distributed over networked computer systems so that computer-readable code can be stored in a distributed fashion.

The steps of the method or algorithm described in the embodiments of the present invention may be directly implemented with hardware, implemented with a software module executed by hardware, or with a combination thereof. The software module may reside in a RAM (Random Access Memory), a ROM (Read Only Memory), an EPROM (Erasable Programmable ROM), an EEPROM (Electrically Erasable Programmable ROM), a flash memory, a hard disk, a removable disk, a CD-ROM, or any type of computer-readable recording medium well known in the technical field to which the present invention pertains.

The embodiments of the present invention have been described above with reference to the accompanying drawings, but those skilled in the art to which the present invention pertains can understand that the present invention may be implemented in other specific forms without changing the technical idea or essential features. Therefore, the embodiments described above are illustrative in all respects, and should be understood as non-limiting.

[Description of Reference Numeral]

100: Client Device
110: Detailed Code Generation Unit
120: First Code Generation Unit
130: Communication Unit
200: Service Device
200_1: First Device
200_2: Second Device
210: Communication Unit
220: Third Code Generation Unit
230: First Code Extraction Unit
240: Role Information Verification Unit
300: Verification Device
310: Communication Unit
320: Detailed Code Extraction Unit
330: Authentication Information Search Unit
340: Second Code Generation Unit

**Claims**

1. A device-to-device authentication method to obtain authority over a plurality of service devices (200), performed by a first device (200_1), among the plurality of service devices (200) based on a virtual authentication code, the method comprising:

transmitting, to a verification device (300), a first code that is a source code for generating the virtual authentication code received from a client device (100), wherein the first code is generated based on identification information of the client device and used by a verification device that grants authority to the client device through verification of the first code;
receiving a second code reflecting an authentication result for the first code from the verification device (300), wherein the second code includes a hash value and role information for the client device generated by the verification device based on the first code;
generating a third code that is the virtual authentication code, based on the first code and the second code; and
identifying at least one second device (200_2) among the plurality of service devices (200) capable of authenticating the authority of the client device (100), based on the role information of the second code included in the third code,
transmitting the third code to the at least one second device (200_2) related to the role information so that the client device (100) is granted access authority for the second service device (200_2) without accessing the verification device (300),
wherein the first device (200_1) is a device for which the client device (100) initially requests the approval of access authority, among the plurality of service devices (200).

**2.** The method of claim 1, wherein the second code further includes valid time information on the second code, and wherein the method further comprises:

receiving the third code for updating an expired second code from the second device,
transmitting the first code to the verification device,
requesting the verification device to update the second code when authentication of the client device is completed based on the first code, and then to transmit the updated second code to the first device,
regenerating a third code based on the first code, the updated second code, and reception time data of the updated second code, and transmitting the regenerated third code to a second device.

**3.** The method of claim 1, wherein the second code includes a plurality of detailed codes,

wherein the plurality of detailed codes are generated by being changed for each unit count by the client device, and
wherein the unit count is set at a specific time interval, and is changed as the time interval elapses.

**4.** The method of claim 1, wherein the detailed code includes a plurality of first detailed codes and second detailed codes having a correlation with each other,

wherein the first detailed code determines a search starting point for the role information of the client device in the verification device, and
wherein the second detailed code determines a search path for the role information from the search starting point.

**5.** A program stored in a medium, which, when the program is executed by a computer, cause the computer to execute the method of any one of claims 1 to 4.

**6.** A device-to-device authentication method to obtain authority over a plurality of service devices (200), the method comprising:

generating, by a client device (100), a first code that is a source code for generating the virtual authentication code, based on identification information of the client device;
transmitting , by the client device, the first code to a verification device (300) through a first device (200_1) among the plurality of service devices, wherein the first code that is a source code for generating the virtual authentication code and used by a verification device that grants authority to the client device through verification of the first code;
receiving, by the verification device (300), the first code,
performing, by the verification device, authentication of the client device by searching for a storage location of the identification information of the client device, based on the first code;
generating, by the verification device, role information on the client device when authentication of the client device is completed;
generating, by the verification device, a hash value for the client device based on the first code:

generating, by the verification device, a second code reflecting an authentication result for the first code, based on the generated role information and hash value;
transmitting, by the verification device, the second code to the first device;
receiving, by the first device (200_1), the second code reflecting an authentication result for the first code from the verification device (300), wherein the second code includes a hash value and role information for the client device generated by the verification device based on the first code;
generating, by the first device, a third code that is the virtual authentication code, based on the first code and the second code; and
identifying at least one second device 200_2 among the plurality of service devices (200) capable of authenticating the authority of the client device (100), based on the role information of the second code included in the third code,
transmitting the third code to the at least one second device (200_2) related to the role information,
receiving, by the at least one second device (200_2), the third code from the first device, and
approving, by the at least one second device, authority of the client device, based on the third code,
wherein the approving the authority includes:

generating, by the at least one second device, a hash value for the client device, based on a first code used to generate the third code and included in the third code;

verifying, by the at least one second device, the client device by comparing the generated hash value with a hash value in the third code; and

approving, by the at least one second device, the authority of the client device by determining role information on the client device, based on the third code.

wherein the first device (200_1) is a device for which the client device (100) initially requests the approval of access authority, among the plurality of service devices (200).

**Patentansprüche**

1. Gerät-zu-Gerät-Authentifizierungsverfahren zum Erhalten der Berechtigung über eine Vielzahl von Servicegeräten (200), durchgeführt von einem ersten Gerät (200_1), unter der Vielzahl von Servicegeräten (200) auf der Grundlage eines virtuellen Authentifizierungscodes, wobei das Verfahren umfasst:

   Senden, an ein Verifizierungsgerät (300), eines ersten Codes, der ein Quellcode zur Erzeugung des virtuellen Authentifizierungscodes ist, der von einem Client-Gerät (100) erhalten wird, wobei der erste Code auf der Grundlage von Identifizierungsinformationen des Client-Geräts erzeugt wird und von einem Verifizierungsgerät verwendet wird, das dem Client-Gerät durch Verifizierung des ersten Codes eine Berechtigung erteilt;
   Empfangen eines zweiten Codes, der ein Authentifizierungsergebnis für den ersten Code von dem Verifizierungsgerät (300) reflektiert, wobei der zweite Code einen Hash-Wert und Rolleninformationen für das Client-Gerät enthält, die von dem Verifizierungsgerät auf der Grundlage des ersten Codes erzeugt werden;
   Erzeugen eines dritten Codes, welcher der virtuelle Authentifizierungscode ist, auf der Grundlage des ersten und des zweiten Codes; und
   Identifizieren mindestens eines zweiten Geräts (200_2) unter der Vielzahl von Servicegeräten (200), das in der Lage ist, die Berechtigung des Client-Geräts (100) zu authentifizieren, auf der Grundlage der Rolleninformationen des in dem dritten Code enthaltenen zweiten Codes,
   Senden des dritten Codes an das mindestens eine zweite Gerät (200_2), das sich auf die Rolleninformationen bezieht, so dass das Client-Gerät (100) Zugangsberechtigung für das zweite Servicegerät (200_2) erhält, ohne auf das Verifizierungsgerät zuzugreifen (300),
   wobei das erste Gerät (200_1) ein Gerät ist, für welches das Client-Gerät (100) zunächst die Genehmigung der Zugangsberechtigung anfragt, unter der Vielzahl von Servicegeräten (200).

2. Verfahren nach Anspruch 1, wobei der zweite Code ferner gültige Zeitinformationen über den zweiten Code enthält, und
   wobei das Verfahren ferner umfasst:

   Empfangen des dritten Codes zur Aktualisierung eines abgelaufenen zweiten Codes von dem zweiten Gerät,
   Senden des ersten Codes an das Verifizierungsgerät,
   Auffordern des Verifizierungsgeräts, den zweiten Code zu aktualisieren, wenn die Authentifizierung des Client-Geräts auf der Grundlage des ersten Codes abgeschlossen ist, und anschließend den aktualisierten zweiten Code an das erste Gerät zu senden,
   erneutes Erzeugen eines dritten Codes auf der Grundlage des ersten Codes, des aktualisierten zweiten Codes, und Empfangszeitdaten des aktualisierten zweiten Codes, und Senden des erneut erzeugten dritten Codes an ein zweites Gerät.

3. Verfahren nach Anspruch 1, wobei der zweite Code eine Vielzahl von detaillierten Codes enthält, wobei die Vielzahl von detaillierten Codes erzeugt werden, indem sie für jede Einheitszählung durch das Client-Gerät geändert werden, und
   wobei die Einheitszählung in einem bestimmten Zeitintervall festgelegt ist und sich mit Ablauf des Zeitintervalls ändert.

4. Verfahren nach Anspruch 1, wobei der detaillierte Code eine Vielzahl von ersten detaillierten Codes und zweiten detaillierten Codes enthält, die miteinander korrelieren,

   wobei der erste detaillierte Code einen Suchstartpunkt für die Rolleninformationen des Client-Geräts in dem Verifizierungsgerät bestimmt, und

**EP 3 907 683 B1**

wobei der zweite detaillierte Code einen Suchpfad für die Rolleninformationen ausgehend vom Suchstartpunkt bestimmt.

5. Programm, das auf einem Medium gespeichert ist und bei Ausführung des Programms durch einen Computer bewirkt, dass der Computer das Verfahren nach einem der Ansprüche 1 bis 4 ausführt.

6. Gerät-zu-Gerät-Authentifizierungsverfahren zum Erhalten der Berechtigung über eine Vielzahl von Servicegeräten (200), wobei das Verfahren umfasst:

Erzeugen, mittels eines Client-Geräts (100), eines ersten Codes, der ein Quellcode zur Erzeugung des virtuellen Authentifizierungscodes ist, auf der Grundlage von Identifizierungsinformationen des Client-Geräts;
Senden, mittels des Client-Geräts, des ersten Codes an ein Verifizierungsgerät (300) durch ein erstes Gerät (200_1) unter der Vielzahl von Servicegeräten, wobei der erste Code ein Quellcode zur Erzeugung des virtuellen Authentifizierungscodes ist und von einem Verifizierungsgerät verwendet wird, das dem Client-Gerät durch Verifizierung des ersten Codes eine Berechtigung erteilt;
Empfangen, mittels des Verifizierungsgeräts (300), des ersten Codes, Durchführen, mittels des Verifizierungsgeräts, der Authentifizierung des Client-Geräts durch Suchen nach einem Speicherort der Identifizierungsinformationen des Client-Geräts, auf der Grundlage des ersten Codes; Erzeugen, mittels des Verifizierungsgeräts, von Rolleninformationen über das Client-Gerät, wenn die Authentifizierung des Client-Geräts abgeschlossen ist;
Erzeugen, mittels des Verifizierungsgeräts, eines Hash-Werts für das Client-Gerät auf der Grundlage des ersten Codes;
Erzeugen, mittels des Verifizierungsgeräts, eines zweiten Codes, der ein Authentifizierungsergebnis für den ersten Code reflektiert, auf der Grundlage der erzeugten Rolleninformationen und des Hash-Werts;
Senden, mittels des Verifizierungsgeräts, des zweiten Codes an das erste Gerät;
Empfangen, mittels des ersten Geräts (200_1), des zweiten Codes, der ein Authentifizierungsergebnis für den ersten Code von dem Verifizierungsgerät (300) reflektiert, wobei der zweite Code einen Hash-Wert und Rolleninformationen für das Client-Gerät enthält, die von dem Verifizierungsgerät auf der Grundlage des ersten Codes erzeugt werden;
Erzeugen, mittels des ersten Geräts, eines dritten Codes, welches der virtuelle Authentifizierungscode ist, auf der Grundlage des ersten Codes und des zweiten Codes; und
Identifizieren mindestens eines zweiten Geräts (200_2) unter der Vielzahl von Servicegeräten, das in der Lage ist, die Berechtigung des Client-Geräts (100) zu authentifizieren, auf der Grundlage der Rolleninformationen des in dem dritten Code enthaltenen zweiten Codes,
Senden des dritten Codes an das mindestens eine zweite Gerät (200_2), das sich auf die Rolleninformationen bezieht,
Empfangen, mittels des mindestens einen zweiten Geräts (200_2), des dritten Codes von dem ersten Gerät, und
Erteilen, mittels des mindestens einen zweiten Geräts, der Berechtigung des Client-Geräts, auf der Grundlage des dritten Codes,
wobei das Erteilen der Berechtigung umfasst:

Erzeugen, mittels des mindestens einen zweiten Geräts, eines Hash-Werts für das Client-Gerät, auf der Grundlage eines ersten Codes, der zum Erzeugen des dritten Codes verwendet wird und in dem dritten Code enthalten ist;
Verifizieren, mittels des mindestens einen zweiten Geräts, des Client-Geräts durch Vergleichen des erzeugten Hash-Werts mit einem Hash-Wert in dem dritten Code; und
Erteilen, mittels des mindestens einen zweiten Geräts, der Berechtigung des Client-Geräts durch Bestimmen von Rolleninformationen über das Client-Gerät, auf der Grundlage des dritten Codes,
wobei das erste Gerät (200_1) ein Gerät ist, für welches das Client-Gerät (100) zunächst die Genehmigung der Zugangsberechtigung anfragt, unter der Vielzahl von Servicegeräten (200).

**Revendications**

1. Procédé d'authentification de dispositif à dispositif pour obtenir une autorité sur une pluralité de dispositifs de service (200), mis en oeuvre par un premier dispositif (200_1), parmi la pluralité de dispositifs de service (200) en fonction d'un code d'authentification virtuelle, le procédé comprenant :

la transmission, à un dispositif de vérification (300), d'un premier code qui est un code source permettant de générer le code d'authentification virtuelle reçu d'un dispositif client (100), le premier code étant généré en fonction d'informations d'identification du dispositif client et utilisé par un dispositif de vérification qui accorde une autorité au dispositif client par vérification du premier code ;

la réception d'un deuxième code reflétant un résultat d'authentification pour le premier code à partir du dispositif de vérification (300), le deuxième code comportant une valeur de hachage et des informations de rôle pour le dispositif client, générées par le dispositif de vérification en fonction du premier code ;

la génération d'un troisième code qui est le code d'authentification virtuelle, en fonction du premier code et du deuxième code ; et

l'identification d'au moins un second dispositif (200_2) parmi la pluralité de dispositifs de service (200) capable d'authentifier l'autorité du dispositif client (100), en fonction des informations de rôle du deuxième code incluses dans le troisième code,

la transmission du troisième code à l'au moins un second dispositif (200_2) se rapportant aux informations de rôle de sorte que le dispositif client (100) se voit accorder une autorité d'accès pour le second dispositif de service (200_2) sans accéder au dispositif de vérification (300),

dans lequel le premier dispositif (200_1) est un dispositif pour lequel le dispositif client (100) demande initialement l'approbation d'autorité d'accès, parmi la pluralité de dispositifs de service (200).

**2.** Procédé selon la revendication 1, dans lequel le deuxième code comporte en outre des informations de temps de validité sur le deuxième code, et

le procédé comprenant en outre :

la réception du troisième code pour mettre à jour un deuxième code expiré à partir du second dispositif,

la transmission du premier code au dispositif de vérification,

le fait de demander au dispositif de vérification de mettre à jour le deuxième code lorsqu'une authentification du dispositif client est achevée en fonction du premier code, puis de transmettre le deuxième code mis à jour au premier dispositif,

la régénération d'un troisième code en fonction du premier code, du deuxième code mis à jour, et de données temporelles de réception du deuxième code mis à jour, et la transmission du troisième code régénéré à un second dispositif.

**3.** Procédé selon la revendication 1, dans lequel le deuxième code comporte une pluralité de codes détaillés,

dans lequel la pluralité de codes détaillés sont générés en étant changés pour chaque comptage unitaire par le dispositif client, et

le comptage unitaire étant réglé à un intervalle de temps spécifique, et étant changé à mesure que l'intervalle de temps s'écoule.

**4.** Procédé selon la revendication 1, dans lequel le code détaillé comporte une pluralité de premiers codes détaillés et de seconds codes détaillés ayant une corrélation les uns avec les autres,

dans lequel le premier code détaillé détermine un point de départ de recherche pour les informations de rôle du dispositif client dans le dispositif de vérification, et

dans lequel le second code détaillé détermine un chemin de recherche pour les informations de rôle à partir du point de départ de recherche.

**5.** Programme stocké dans un support, qui, lorsque

le programme est exécuté par un ordinateur, amène l'ordinateur à exécuter le procédé selon l'une quelconque des revendications 1 à 4.

**6.** Procédé d'authentification de dispositif à dispositif pour obtenir une autorité sur une pluralité de dispositifs de service (200), le procédé comprenant :

la génération, par un dispositif client (100), d'un premier code qui est un code source permettant de générer le code d'authentification virtuelle, en fonction d'informations d'identification du dispositif client ;

la transmission, par le dispositif client, du premier code à un dispositif de vérification (300) par l'intermédiaire d'un premier dispositif (200_1) parmi la pluralité de dispositifs de service, le premier code étant généré en fonction d'informations d'identification du dispositif client et utilisé par un dispositif de vérification qui accorde une autorité au dispositif client par vérification du premier code ;

la réception, par le dispositif de vérification (300), du premier code,

la mise en oeuvre, par le dispositif de vérification, d'une authentification du dispositif client en recherchant un emplacement de stockage des informations d'identification du dispositif client, en fonction du premier code ;

la génération, par le dispositif de vérification, d'informations de rôle concernant le dispositif client lorsqu'une authentification du dispositif client est achevée ;

la génération, par le dispositif de vérification, d'une valeur de hachage pour le dispositif client en fonction du premier code :

la génération, par le dispositif de vérification, d'un deuxième code reflétant un résultat d'authentification pour le premier code, en fonction des informations de rôle et de la valeur de hachage, générées ;

la transmission, par le dispositif de vérification, du deuxième code au premier dispositif ;

la réception, par le premier dispositif (200_1), du deuxième code reflétant un résultat d'authentification pour le premier code à partir du dispositif de vérification (300), le deuxième code comportant une valeur de hachage et des informations de rôle pour le dispositif client, générées par le dispositif de vérification en fonction du premier code ;

la génération, par le premier dispositif, d'un troisième code qui est le code d'authentification virtuelle, en fonction du premier code et du deuxième code ; et

l'identification d'au moins un second dispositif 200_2 parmi la pluralité de dispositifs de service (200) capable d'authentifier l'autorité du dispositif client (100), en fonction des informations de rôle du deuxième code incluses dans le troisième code,

la transmission du troisième code à l'au moins un second dispositif (200_2) se rapportant aux informations de rôle,

la réception, par l'au moins un second dispositif (200_2), du troisième code à partir du premier dispositif, et

l'approbation, par l'au moins un second dispositif, d'une autorité du dispositif client, en fonction du troisième code,

l'approbation de l'autorité comportant :

la génération, par l'au moins un second dispositif, d'une valeur de hachage pour le dispositif client, en fonction d'un premier code utilisé pour générer le troisième code et inclus dans le troisième code ;

la vérification, par l'au moins un second dispositif, du dispositif client en comparant la valeur de hachage générée à une valeur de hachage dans le troisième code ; et

l'approbation, par l'au moins un second dispositif, de l'autorité du dispositif client en déterminant des informations de rôle sur le dispositif client, en fonction du troisième code.

dans lequel le premier dispositif (200_1) est un dispositif pour lequel le dispositif client (100) demande initialement l'approbation d'autorité d'accès, parmi la pluralité de dispositifs de service (200).

[Figure 1]

EP 3 907 683 B1

[Figure 1]

Client Device 100 · First Device 200_1 · Second Device 200_2 · Verification Device 300

① S410 — Generate 1st code

② S420 — Transmit 1st code to request authority approval

③ S430 — Transmit 1st code to request authentication of client device

④ S440 — Authenticate client device based on 1st code

⑤ S450 — Generate 2nd code reflecting authentication result of 1st code

⑥ S460 — Transmit 2nd code

⑦ S470 — Generate 3rd code based on 1st and 2nd codes

【Figure 2】

Client Device (100)

Detailed Code
Generation Unit (110)

First Code
Generation Unit (120)

Communication Unit
(130)

【Figure 3】

S410

Generate 1st code for generating virtual authentication
code based on identification information

S420

Transmit 1st code to 1st device to request
authority approval of client device

【Figure 4】

| Client ID | Client secret # |
|---|---|
| 1st code (otac_u) | |

【Figure 5】

Service Device (200)

Communication Unit (210)

Third Code
Generation Unit (220)

First Code
Extraction Unit (230)

Role Information
Verification Unit (240)

【Figure 6】

S430

Receive 1$^{st}$ code for generation of virtual authentication code through 1$^{st}$ device

S440

Perform authentication by searching for storage location of identification
information of client device based on 1$^{st}$ code

S451

Generate role information on client device when authentication of client device
is completed

S452

Generate hash value for client device based on 1$^{st}$ code after generation of client
role information

S453

Generate 2$^{nd}$ code reflecting authentication result of 1$^{st}$ code based on role
information and hash value

【Figure 7】

time point S

Storage location of
authentication
information of
client device

time point S

Virtual authentication code
generation function starting point
(time point S)

Issue ID of
client device A

Issue ID of
client device B

2nd code

Time point corresponding
to 1st code (time point B)

【Figure 8】

| 1$^{st}$ code (otac_u) # | Role | Role secret # |
|---|---|---|

2$^{nd}$ code (otac_a)

【Figure 9】

Service Device (200)

Communication Unit (210)

Third Code
Generation Unit (220)

First Code
Extraction Unit (230)

Role Information
Verification Unit (240)

【Figure 10】

```
                                                              S430
┌─────────────────────────────────────────────┐ ⌐
│ Transmit 1ˢᵗ code for generation of virtual  │
│ authentication code to verification device   │
└─────────────────────────────────────────────┘      S470
                      │
                      ▼
┌─────────────────────────────────────────────┐ ⌐
│ Generate 3ʳᵈ code based on 1ˢᵗ code and      │
│ 2ⁿᵈ code received from verification device    │
└─────────────────────────────────────────────┘      S480
                      │
                      ▼
┌─────────────────────────────────────────────┐ ⌐
│ Transmit 3ʳᵈ code to at least one 2ⁿᵈ         │
│ device related to role information           │
└─────────────────────────────────────────────┘
```

【Figure 11】

| Client ID | Client secret # | 2ⁿᵈ code reception time |
|---|---|---|
| 1ˢᵗ code (otac_u) | | |

| 1ˢᵗ code (otac_u) # | Role | Role secret # |
|---|---|---|
| 2ⁿᵈ code (otac_a) | | |

3ʳᵈ code (otac_p)

EP 3 907 683 B1

**[Figure 12]**

| Client Device 100 | First Device 200_1 | Second Device 200_2 | Third Device 200_2 | Verification Device 300 |

① S480 — Transmit 3$^{rd}$ code

② S490 — Approve authority of client device based on 3$^{rd}$ code

Response — S500 ③

【Figure 13】

S480 Receive 3rd code from 1st device

S490 Approve authority of client device for 2nd device based on 3rd code

【Figure 14】

S491 Generate hash value based on 1st code

S492 Verify client device through comparison between generated hash value and hash value in 3rd code

S493 Approve authority by determining role information of client device based on 3rd code

【Figure 15】

S493_a Determine whether 2nd device is included in accessible devices of client device

S493_b Approve authority corresponding to role information of client device for 2nd device

【Figure 16】

S494

Generate information for identifying successful client device verification and approved authority in $2^{nd}$ device

S495

Generate new $3^{rd}$ code based on $3^{rd}$ code and identification information

**EP 3 907 683 B1**

**Patent documents cited in the description**

- GB 2489563 A

- US 2020051075 A1